# EUROPEAN PATENT APPLICATION

(11) **EP 4 679 683 A1**
(43) Date of publication of application: **14.01.2026**
(21) Application number: 24187105.2
(22) Date of filing: 08.07.2024
(51) Int. Cl.: H02K 9/19, H02K 1/32, H02K 5/20, H02K 9/193

(54) **COOLING SYSTEM FOR AN ELECTRIC DEVICE AND ELECTRIC MOTOR WITH THE COOLING SYSTEM**

(71) Applicant: KB Intellectual Property GmbH & Co. KG, 82049 Pullach (DE)
(72) Inventor: HOLLOSI, Mate, 1097 Budapest (HU); GYURKÓ, Zoltán, 1047 Budapest (HU); NEMETH, Huba, 1116 Budapest (HU); NASZEK, Attila, 1118 Budapest (HU); STRAUB, Kornel, 2013 Pomáz (HU); TOTH, Janos, 6000 Kecskemét (HU); SINKA, Örs, 6000 Kecskemét (HU); FERENCZ, Jozsef Zsolt, 1135 Budapest (HU); TOTH, Zoltan, 1046 Budapest (HU); DEAK, Gergely, 1043 Budapest (HU)

(57) **Abstract**

The present invention refers to a cooling system (100) for an electric device, in particular an electric motor, comprising a housing (110), a rotor (130) enclosed in the housing (120) and a cooling circuit (160) having a first part (162) for transporting cooling fluid on the circumferential surface (140) of the rotor (130) from the first side (136) to the second side (138) and a second part (164) for transporting the cooling fluid back to the first side (136) or vice versa, the second part (164) being located at least partially inside the housing (120) and having a larger distance to the rotation axis X than the first part (162). Further, the present invention refers to an electric motor (110).

## Description

The present invention refers to a cooling system for an electric device, in particular an electric motor, e.g. a steering motor, and an electric motor.

According to the prior art, it is necessary to cool down electrical motors, in particular high-power electric motors, in order to prevent overheating. An overheating can deteriorate in particular necessary insulations, for example at the stator windings, and/or degenerate bearing mechanisms or accelerate the aging process of oil inside the motor.

There are several known concepts for cooling down an electric motor by a fluid, which might be a gas or a liquid. Cooling concepts using oil as cooling fluid use typically an external pump mechanism or additional components, which increases the complexity and costs of the system.

US 6,191,511 B1 discloses a liquid cooled asynchronous electric machine. The document describes an asynchronous motor with a stator and a rotor having a shaft, wherein a pump is incorporated into the shaft. The cooling liquid is pumped along the shaft to a radial canal at one end of the shaft to be transported to a cooling chamber, cooled by the ambient air, in the stator, and guided back through conduits at the stator for being returned to the shaft by another set of radial canals at the same end of the shaft.

US 10,587,169 B2 discloses a rotor for an electric machine, the rotor having a rotor shaft. At least sections of the rotor shaft are configured as a hollow shaft. A delivery screw is non-rotatably mounted in the hollow shaft for conveying a cooling fluid in a first direction through the hollow shaft. In order to provide an improved cooling of the rotor, the rotor body is formed with at least one cooling channel which extends in the axial direction.

US 9,331,552 B2 discloses an electric motor cooling system, in which at least one heat pipe is captured within at least one hollow region within the motor's rotor shaft.

US 11,018,539 B2 discloses an electric machine with helical cooling channels. The electric machine includes a rotor with a shaft and a stator with stator winding heads as well as a housing with a reservoir for a cooling liquid. The rotor may be provided with guide means for guiding the cooling liquid from the rotor to the stator winding heads. In particular, there may be seven cooling channels running parallel one to another. The housing may have additional guide means for guiding the cooling liquid from the rotor to the stator winding heads.

US 7,489,057 B2 discloses a rotor assembly cooling system. A portion of the rotor shaft is provided as an open shaft having an open end, through which the coolant may flow in one direction along the central axis and an off central channel, through which the coolant may flow back.

US 9,948,158 B2 discloses a motor cooling system for cooling a motor unit including a stator assembly and a rotor assembly configured to rotate a rotor shaft, which includes a stator casing and an arm casing. The stator casing includes a stator casing body having a stator casing wall with an internal cavity to receive the motor unit and a rib with a groove defined between adjacent portions of the rib. The rib is facing the stator. The coolant may be pumped along the spiral groove defined by the rib.

It is an object of the invention to provide an efficient and simple cooling system for an electric device having a rotor, in particular a cooling system which does not make use of any external pumping device or the like. Moreover, it is an object of the present invention to provide an electric motor with such a cooling system.

These objectives are resolved by the cooling system according to independent claim 1 and, concerning an electrical motor, by independent claim 12. Preferred embodiments are addressed by the dependent claims respectively.

According to the present invention the cooling system for an electric device, in particular an electric motor, comprises a housing, a rotor enclosed in the housing, the rotor comprising a rotor body for rotating around a rotation axis and an outer circumferential surface, wherein the rotor body has a first side and an opposing second side, being spaced apart from each other along the rotation axis and a cooling circuit having a first part for transporting cooling fluid on and/or along the circumferential surface of the rotor from the first side to the second side and a second part for transporting the cooling fluid back to the first side or vice versa, the second part being located at least partially inside the housing and having a larger distance to the rotation axis than the first part.

Rotor windings, if present, are in particular covered, in particular completely covered, by the outer circumferential surface. The circumferential surface is preferably provided with a surface structure propagating for transporting the cooling fluid.

The present invention is based on the idea to provide heat dissipation with fluid drifting along the rotor surface, whereby motion/movement of the fluid is provided and ensured by the components of the electric device, e.g. the rotor, themselves.

The cooling fluid may be oil. In particular, the cooling fluid may be chosen in such a way, that it is as well suitable for lubricating bearings of the rotor and/or having isolating properties to avoid short-circuits in windings of the electric device, in particular of an electric motor.

According to one preferred embodiment the cooling circuit is (to be) driven by the rotation of the rotor. The direction of the cooling circuit may be determined by the rotation direction of the rotor.

In more detail, the rotor is configured to drive the cooling circuit, preferably configured to comprise means, like e.g. spiral rib(s) and/or groove(s), for pushing and forwarding the cooling fluid in a certain direction of the system.

Pursuant to another preferred embodiment, the surface of the rotor is provided with at least one spiral rib extending from the first side of the rotor body to the second side of the rotor body.

The spiral rib can be considered as an (integral) part of the surface structure. Such a spiral rib determines the transporting direction of the cooling fluid in dependence of the turning direction of the rotor.

According to an embodiment the circumferential surface of the rotor body is provided with two or more spiral ribs, extending parallel to each other and being spaced apart, preferably in a circumferential direction.

Preferably, the one or more spiral ribs can be provided and extend along the rotor body in a helical form.

According to a further embodiment the surface of the rotor is provided with at least one spiral groove extending from the first side of the rotor body to the second side of the rotor body.

The spiral groove can be considered as an embodiment of the surface structure. Such a spiral groove determines the transporting direction of the cooling fluid in dependence of the turning direction of the rotor.

In particular, the circumferential surface of the rotor body is provided with two or more spiral grooves, extending parallel to each other and being spaced apart in a circumferential direction.

Preferably, the one or more spiral grooves can be provided and extend along the rotor body in a helical form.

The rotor may be provided with ribs and grooves.

According to an embodiment, the housing further encloses a stator, the stator surrounding the rotor at least in part, in particular completely, in a circumferential direction.

Optionally, the stator comprises holes extending from/between a first side of the housing to/and a second side of the housing, wherein the second part of the cooling circuit extends through the holes.

In particular, the holes of the stator can extend along a longitudinal extension of the stator in order to provide a fluid connection between end sides of the stator.

These holes are typically dimensioned such that an efficient cooling of stator windings is possible.

Moreover, the holes forming channels may preferably be arranged parallel to the rotor axis. However, in different embodiments non-straight channels, for example meandering channels, spirally/helically extending/formed channels or the like may be provided.

Moreover, it may also be a further alternative embodiment that the housing can comprise a stator, e.g. as one (integral) part or area of the housing, or a stator can be embedded in the housing, at least partially embedded.

According to a further embodiment, the stator has an inner surface facing the outer circumferential surface of the rotor, wherein the inner surface of the stator is provided with at least one spiral rib and/or groove, in particular several spiral ribs and/or grooves extending parallel to each other.

In such an embodiment the rotor movement may push the cooling fluid along the rib or groove of the stator. In some embodiments, there may be rotor grooves and/or ribs and additionally stator grooves and/or ribs, in particular facing each other.

According to one embodiment, the cooling circuit is located inside the housing, in particular completely inside the housing.

According to a further preferred embodiment, the cooling circuit further comprises an external reservoir and/or an external heat exchanger, and the cooling circuit is connected to the external reservoir and/or the external heat exchanger through at least one inlet and/or outlet hole in the housing, in particular located in a first sidewall of the housing.

Hence, in the context of the present invention there can be external components like heat exchangers or external reservoirs. Such external components, like heat exchangers or additional fluid reservoirs, can provide increased capabilities and performance of the corresponding cooling circuit. In particular, no external pump is necessary in order to provide a functional cooling system according to the present invention.

According to another aspect an electric motor with a cooling system according to the present invention is provided, the electric motor comprising a housing, a stator and a rotor enclosed in the housing.

Accordingly, the electric motor can be considered to be provided in and to comprise a configuration which allows to implement a cooling system with a cooling circuit according to the present invention, in particular by comprising a correspondingly configured rotor.

All of the advantages and technical effects being described in the context of the cooling system can also be applied, individually or commonly, for the electric motor according to the present invention.

Further details and advantages of the present invention are explained and described in more detail in the context of the embodiment as illustrated by the enclosed figures.

It is schematically shown:
- Fig. 1: cross-section of an electrical motor with the cooling system in a first embodiment,
- Fig. 2: stator having cooling holes,
- Fig. 3: stator with grooves along the inner surface,
- Fig. 4: rotor with grooves along the circumferential surface, and
- Fig. 5: cross-section of an electrical device with the cooling system in a second embodiment.

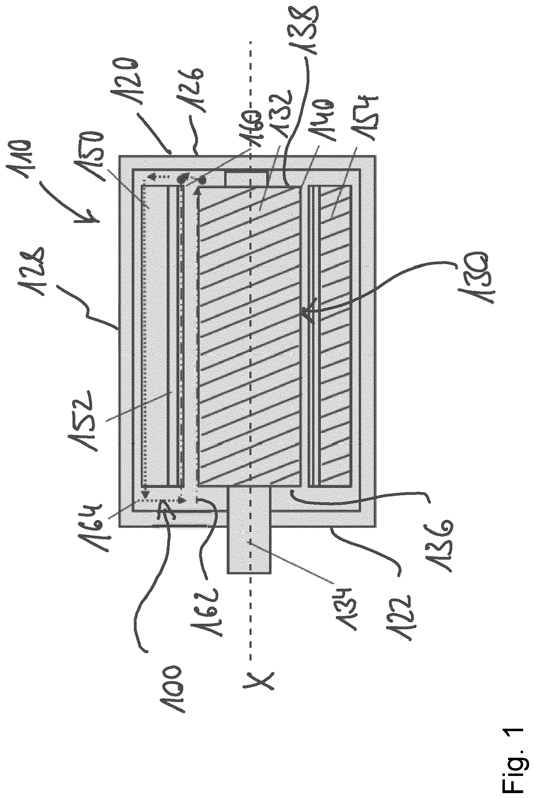

Fig. 1 shows an embodiment of the cooling system 100 for an electric device. The electric device in this embodiment is an electric motor 110.

A housing 120 is depicted, having a first sidewall 122, a second sidewall 126 as well as a circumferential third sidewall 128.

A rotor 130 is enclosed in the housing 120. The rotor 130 comprises a rotor body 132 for rotating around a rotation axis X and an outer circumferential surface 140.

The rotor body 132 has a first side 136 and an opposing second side 138, being spaced apart from each other along the rotation axis X.

The rotor 130 is further provided with a rotor shaft 134, which is connected to the rotor body 132 and may be partially enclosed within the rotor body 132.

The rotor shaft 134 extends through an opening of the housing 120, according to Fig. 1 arranged in the first sidewall 122, along the rotation axis X. Bearings for the rotor shaft 134 are not explicitly shown in Fig. 1.

In the shown embodiment, the first side 136 of the rotor 130 is located near the first sidewall 122 of the housing and the second side 138 of the rotor 130 is located near the second sidewall 126 of the housing. However, different arrangements are possible as well.

The cooling system 100 further comprises a cooling circuit 160 having a first part 162 for transporting cooling fluid on the circumferential surface 140 from the first side 136 to the second side 138 and a second part 164 for transporting the cooling fluid back to the first side 136.

The second part 164 is located at least partially inside the housing 120 and has a larger distance to the rotation axis X than the first part 162.

In the shown embodiment according to Fig. 1, the second part 164 is located completely inside the housing 120.

The cooling circuit 160 may be configured for cooling fluid travelling the circuit also in the inverse direction, namely inverse to the direction as indicated by arrows in Fig. 1.

In particular, the circumferential surface 140 of the rotor 130 is formed as a cylindrical surface.

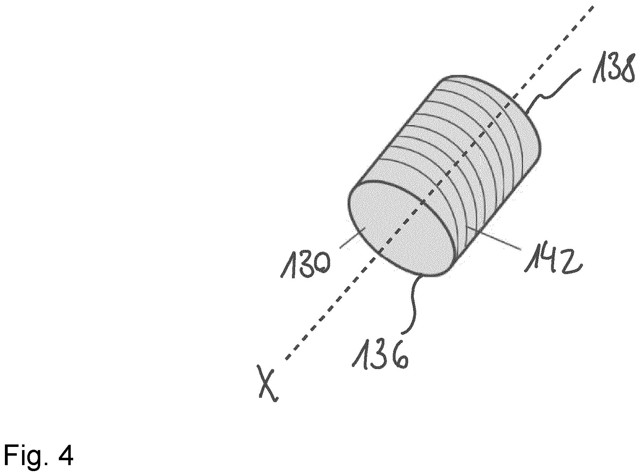

The circumferential surface 140 of the rotor 130 can be provided with grooves 142 which extend as spiral/helical grooves around/along the circumferential surface 140. This is in particular depicted in Fig. 4, showing the rotor body 132 with grooves 142 running parallel to each other.

Instead of the grooves 142 the rotor body 132 can be as well provided with one or more spiral ribs, running parallel to each other, or another surface structure allowing that the cooling fluid is moved by the rotation of the rotor 130 from the first side 136 to the second side 138 or vice versa.

Thus, the cooling fluid, e.g. oil, is transported by the rotation of the rotor 130 from the first side 136 to the second side 138 by the spiral grooves 142 and/or spiral ribs.

At the second side 138 of the rotor, the cooling circuit 160 follows the second sidewall 126 of the housing 120 in radially outward direction and the fluid returns to the first side 122 along the third sidewall 128 of the housing 120 and follows along the first sidewall 122 radially inward to the circumferential surface 140 of the rotor 130.

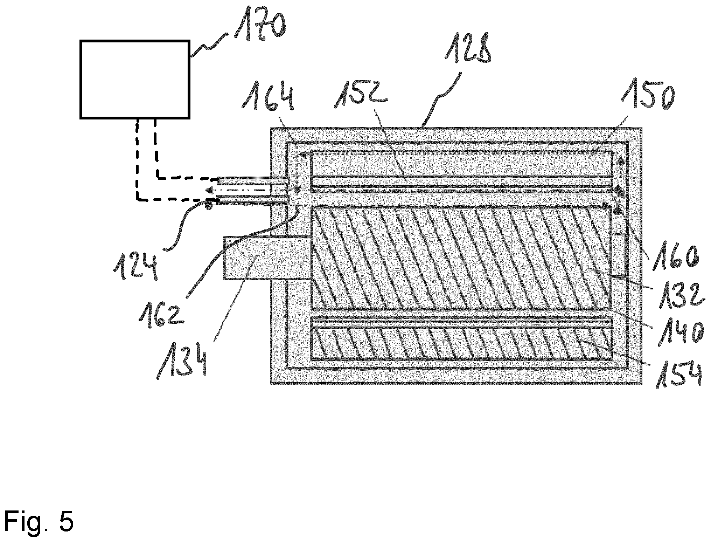

The cooling circuit 160 can be configured as a closed circuit inside the housing 120, as depicted in Fig. 1. Alternatively, cooling system 100, in particular the cooling circuit 160, can be configured as an open circuit comprising and being connected to an external reservoir and/or an external heat exchanger 170 via outlet/inlet holes 124 and connection lines, as depicted in Fig. 5.

Hence, in the context of the present invention there can be external components like heat exchangers or external reservoirs 170. Such external components, like heat exchangers or additional fluid reservoirs, can provide increased capabilities and performance of the corresponding cooling circuit 160.

If the electrical device is configured as an electric motor 110, a stator 150 is included inside the housing 120, which is arranged radially outside the rotor 130.

Both rotor 130 and stator 150 are provided with windings in order to convert electrical current into motion of the rotor 130.

The stator 150 is rotatably fixed in the housing 120.

The stator 150 may be provided with cooling channels or stator holes 152 through which the cooling fluid can be guided back.

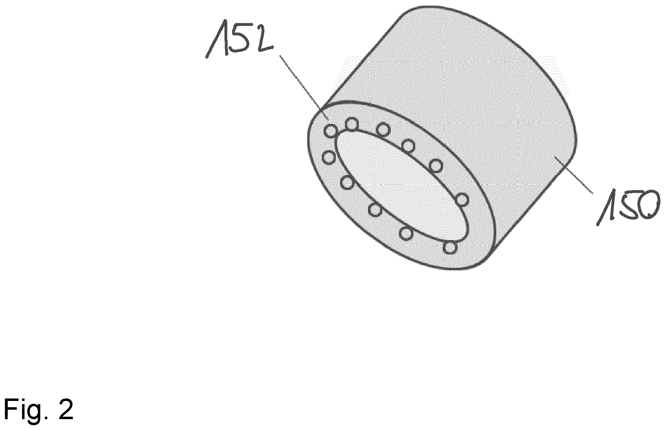

The stator holes 152 may be arranged equidistant in a circumferential direction as depicted in Fig. 2 showing a stator 150. Such an arrangement allows for a rather uniform cooling of stator windings dissipating heat.

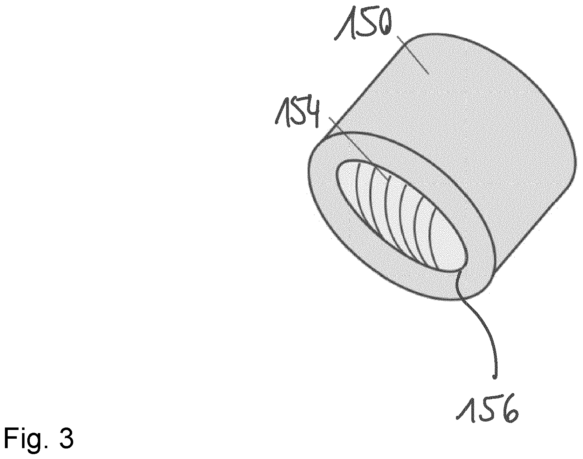

In one embodiment, as depicted in Fig. 3, the stator 150 has a cylindrical inner surface 156 facing the rotor 130, which is provided with grooves 154. The grooves 154 are preferably arranged as spiral grooves running parallel to each other.

The cooling fluid may be transported by the rotation of the rotor 130 along these grooves 154 of the stator 150. In one embodiment, the grooves 142 of the rotor 130 and the grooves 154 of the stator 150 are equidistant and may face a respective other groove or may be shifted to each other in order to improve cooling fluid transportation and movement.

Moreover, in the context of the present invention there can also be a combination of spiral ribs and/or spiral grooves 142, preferably extending in a helical direction along the (circumferential) surface 140 of the rotor 130 and/or the inner surface 156 of the stator 150.

In summary, by the present invention a cooling system 100, in particular for an electric motor 110, can be provided which allows for an easier, more cost-efficient manufacturing and maintenance as well as an efficient cooling of the electrical components.

In particular, a cooling system 100 can be implemented by an electric motor 110 which does not particularly necessitate any further external components, like a fluid pump, in order to drive and run the cooling system, namely the corresponding cooling fluid.

### REFERENCE SIGNS

- 100: Cooling system
- 110: Electric motor
- 120: Housing
- 122: First sidewall
- 124: Inlet/outlet holes
- 126: Second sidewall
- 128: Third sidewall
- 130: Rotor
- 132: Rotor body
- 134: Rotor shaft
- 136: First side
- 138: Second side
- 140: Circumferential surface
- 142: Groove
- 150: Stator
- 152: Stator hole
- 154: Groove
- 156: Inner surface
- 160: Cooling circuit
- 162: First part
- 164: Second part
- 170: Reservoir / heat exchanger
- X: Axis

## Claims

1. Cooling system (100) for an electric device, in particular an electric motor, comprising:
a housing (110),
a rotor (130) enclosed in the housing (120), the rotor (130) comprising a rotor body (132) for rotating around a rotation axis X and an outer circumferential surface (140), wherein the rotor body (132) has a first side (136) and an opposing second side (138), being spaced apart from each other along the rotation axis X and
a cooling circuit (160) having a first part (162) for transporting cooling fluid on the circumferential surface (140) of the rotor (130) from the first side (136) to the second side (138) and a second part (164) for transporting the cooling fluid back to the first side (136) or vice versa, the second part (164) being located at least partially inside the housing (120) and having a larger distance to the rotation axis X than the first part (162).

2. Cooling system (100) according to claim 1,
wherein the cooling circuit (160) is driven by the rotation of the rotor (130).

3. Cooling system (100) according to claim 1 or 2,
wherein the surface of the rotor (130) is provided with at least one spiral rib extending from the first side (136) of the rotor body (132) to the second side (138) of the rotor body (132).

4. Cooling system (100) according to claim 3,
wherein the circumferential surface (140) of the rotor body (132) is provided with two or more spiral ribs, extending parallel to each other and being spaced apart, preferably in a circumferential direction (140).

5. Cooling system (100) according to one of the preceding claims,
wherein the surface of the rotor (130) is provided with at least one spiral groove (142) extending from the first side (136) of the rotor body (132) to the second side (138) of the rotor body (132).

6. Cooling system (100) according to claim 5,
wherein the circumferential surface (140) of the rotor body (132) is provided with two or more spiral grooves (142), extending parallel to each other and being spaced apart in a circumferential direction.

7. Cooling system (100) according to one of the preceding claims,
wherein the housing (120) further encloses a stator (150), the stator (150) surrounding the rotor (130) at least in part, in particular completely, in a circumferential direction.

8. Cooling system (100) according to claim 7,
wherein the stator (150) comprises stator holes (152) extending from a first side (136) of the housing (120) to a second side of the housing (120),
wherein the second part (164) of the cooling circuit (160) extends through the stator holes (152).

9. Cooling system (100) according to claims 7 or 8,
wherein the stator (150) has an inner surface (156) facing the outer circumferential surface (140) of the rotor (130),
wherein the inner surface (156) of the stator (150) is provided with at least one spiral rib and/or at least one spiral groove (154), in particular several spiral ribs and/or grooves (154) extending parallel to each other.

10. Cooling system (100) according to one of the preceding claims,
wherein the cooling circuit (160) is located inside the housing (120), in particular completely inside the housing (120).

11. Cooling system (100) according to one of claims 1 to 9,
wherein the cooling circuit (160) further comprises an external reservoir and/or an external heat exchanger (170), and
the cooling circuit (160) is connected to the external reservoir and/or the external heat exchanger (170) through at least one inlet and/or outlet hole (124) in the housing (120), in particular located in a first sidewall (122) of the housing (120).

12. Electric motor (110) with a cooling system (100) according to one of the preceding claims, the electric motor (110) comprising a housing (120), a stator (150) and a rotor (130) enclosed in the housing (120).
